**Europäisches Patentamt**

(19) **European Patent Office**

**Office européen des brevets**

(11) Numéro de publication : **0 384 808 B1**

(12) # FASCICULE DE BREVET EUROPEEN

(45) Date de publication du fascicule du brevet :
**18.09.91 Bulletin 91/38**

(51) Int. Cl.⁵ : **F02N 15/02, H02K 23/52**

(21) Numéro de dépôt : **90400410.8**

(22) Date de dépôt : **14.02.90**

(54) **Alternateur-démarreur avec dispositif d'accouplement automatique.**

(30) Priorité : **21.02.89 FR 8902244**

(43) Date de publication de la demande :
**29.08.90 Bulletin 90/35**

(45) Mention de la délivrance du brevet :
**18.09.91 Bulletin 91/38**

(84) Etats contractants désignés :
**DE ES GB IT**

(56) Documents cités :
**FR-A- 2 566 868
US-A- 2 154 861**

(73) Titulaire : **VALEO EQUIPEMENTS
ELECTRIQUES MOTEUR
2, Rue André Boulle
F-94000 Creteil (FR)**

(72) Inventeur : **Chazot, Franck
4, Allée Alfred de Musset
F-95580 Margency-Andilly (FR)**
Inventeur : **Michel, Robert
14, rue des Bruyères
F-95540 Mery-Sur-Oise (FR)**

(74) Mandataire : **Gamonal, Didier
Société VALEO Service Propriété Industrielle
30, rue Blanqui
F-93406 Saint-Ouen Cédex (FR)**

EP 0 384 808 B1

Jouve, 18, rue Saint-Denis, 75001 PARIS

## Description

L'invention concerne les machines électriques qui peuvent fonctionner comme alternateur fournissant de l'énergie électrique ou comme démarreur fournissant de l'énergie mécanique sur un arbre de sortie et, plus particulièrement, un dispositif d'accouplement entre l'arbre de sortie de la machine électrique et un moteur à combustion interne qui permet de passer automatiquement du fonctionnement en démarreur à celui d'alternateur.

Tout moteur à combustion interne, par exemple pour véhicules automobiles, est toujours associé, d'une part, à un démarreur qui permet le lancement du moteur, et d'autre part, à une dynamo ou un alternateur qui permet la fourniture du courant électrique nécessaire à la charge de la batterie d'accumulateurs servant à alimenter les différents organes électriques du véhicule.

Le démarreur et l'alternateur sont deux éléments indépendants qui peuvent fonctionner, selon les connexions électriques réalisées, en tant que producteur d'énergie mécanique ou de producteur d'énergie électrique. Aussi, il a été proposé de grouper ces deux éléments en une seule machine électrique grâce à un dispositif d'accouplement de manière à la faire fonctionner soit en alternateur, c'est-à-dire à une vitesse de rotation du rotor définie par le rapport de la liaison entre le moteur et la poulie d'entrée de l'alternateur-démarreur, soit en démarreur, c'est-à-dire à une vitesse démultipliée de façon à obtenir le couple suffisant pour lancer le moteur.

Un brevet français décrit un dispositif d'accouplement automatique comprenant un ensemble de satellites doubles qui est entraîné par l'arbre de sortie de la machine électrique et tourne à l'intérieur de deux couronnes dentées avec lesquelles les satellites sont en prise constante. L'une de ces couronnes, dont la denture est de diamètre primitif légèrement plus grand, est déplaçable suivant son axe pour pouvoir, dans la marche en alternateur/dynamo s'enclencher avec l'autre couronne qui est reliée au moteur du véhicule et, pendant la marche au démarreur, s'en désolidariser et s'enclencher sur un plateau fixe.

Le brevet précité décrit plusieurs variantes de réalisation d'un tel dispositif mais qui ont en commun de mettre en oeuvre des satellites doubles dont la fabrication et le montage/démontage sont très difficiles. En outre, le rendement d'un tel dispositif est d'autant plus mauvais que le rapport de démultiplication est grand. Enfin, le passage d'un type de fonctionnement à un autre nécessite l'utilisation d'un frein électromagnétique.

Le document FR-A-2566868 décrit un démarreur comportant un alternateur dont l'arbre de sortie est couplé à un arbre d'entraînement d'un moteur par un dispositif d'accouplement, le dispositif d'accouplement comprend au moins un train épicycloïdal plan à satellites simples dans lequel le solaire est connecté à l'arbre de sortie d'un moteur électrique tandis que le porte-satellites est connecté à l'arbre d'entraînement du moteur, la couronne est liée au châssis par une première roue libre, le sens de rotation de la première roue libre est celui du solaire.

Le but de la présente invention est donc de réaliser un alternateur-démarreur avec dispositif d'accouplement automatique dont la fabrication et le montage/démontage sont aisés et qui garde un bon rendement pour des rapports de démultiplication élevés.

L'invention se rapporte à un alternateur-démarreur comportant un alternateur dont l'arbre de sortie est couplé à un arbre d'entraînement d'un moteur par un dispositif d'accouplement, caractérisé en ce que le dispositif d'accouplement comprend au moins un train épicycloïdal plan à satellites simples dans lequel le solaire est connecté à l'arbre de sortie de l'alternateur tandis que le porte-satellites est connecté à l'arbre d'entraînement du moteur, en ce que la couronne est liée au châssis par une première roue libre et au porte-satellites par une deuxième roue libre et en ce que le sens de rotation des première et deuxième roues libres est celui du solaire.

D'autres avantages de la présente invention apparaîtront à la lecture de la description suivante d'exemples particuliers de réalisation, ladite description étant faite avec le dessin joint dans lequel :

— la figure 1 est un schéma fonctionnel d'un alternateur démarreur qui utilise comme dispositif d'accouplement automatique un seul train épicycloïdal à satellites simples et deux roues libres associées,

— la figure 2 est une autre forme de présentation d'un dispositif d'accouplement 14 de la figure 1 montrant le sens des roues libres, et

— la figure 3 est un schéma fonctionnel d'un alternateur démarreur qui utilise comme dispositif d'accouplement automatique deux trains épicycloïdaux à satellites simples en série, chaque train étant associé à deux roues libres.

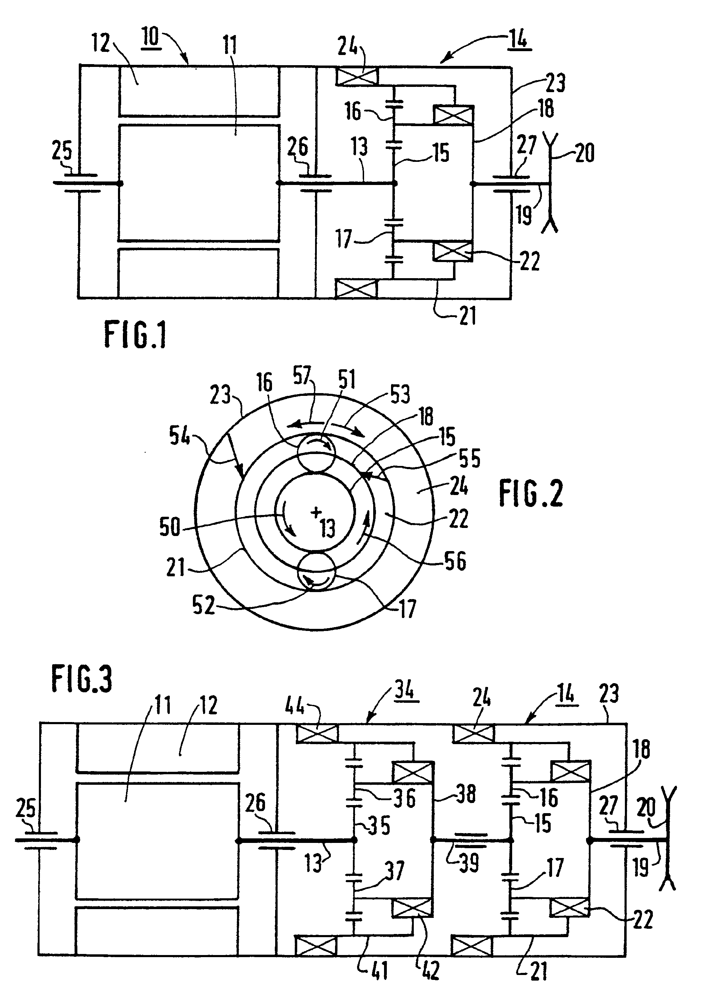

Conformément à l'invention, l'alternateur-démarreur avec dispositif d'accouplement automatique comprend dans l'exemple particulier de réalisation schématisé par la figure 1, une machine électrique 10 constituée d'un rotor 11 et d'un stator 12. Le rotor 11 est solidaire d'un arbre de sortie 13 qui entraîne un train épicycloïdal plan à satellites simples indiqué par la référence 14. Ce train 14 est constitué d'une roue dentée 15, appelée solaire, solidaire de l'arbre de sortie 13 qui entraîne en rotation au moins deux satellites 16 et 17 portés par un porte-satellites 18. On remarquera que les satellites sont en général au nombre de trois décalés de 120° l'un par rapport à l'autre, mais on en a représenté que deux pour ne pas surcharger les dessins.

Le porte-satellites 18 est relié à un arbre 19 qui est solidaire de la poulie d'entraînement 20 du moteur à combustion interne non représenté.

Le train 14 comprend également une couronne dentée 21 qui coopère avec les satellites 16 et 17. La couronne 21 est reliée au porte-satellites 18 par une roue libre 22 et à un châssis fixe ou carter 23 par une autre roue libre 24.

Sur la figure 1, les éléments référencés 25, 26 et 27 représentent schématiquement des paliers de soutien des parties tournantes telles que le rotor 11, le solaire 15, le porte-satellites 18 et la poulie 20.

L'alternateur-démarreur avec dispositif d'accouplement automatique fonctionne de la manière suivante. La rotation de l'arbre 13 (flèche 50 figure 2) en fonction démarreur entraîne la rotation des satellites 16 et 17 (flèches 51 et 52). La couronne 21 serait normalement entraînée en rotation dans le sens de la flèche 53 en l'absence de la roue libre 24. Par suite du sens choisi (flèche 54), cette roue libre se bloque et empêche la rotation de la couronne 21 dans le sens de la flèche 53. Le blocage de la couronne 21 a pour conséquence d'entraîner la rotation du porte-satellites 18 (flèche 56) avec un rapport de démultiplication qui dépend du rapport des nombres de dents entre le solaire 15 et la couronne 21, ce rapport devant être suffisamment grand pour obtenir la vitesse et le couple moteur désirés sur l'arbre 19. On remarquera que la rotation du porte-satellites n'est pas gênée par la présence de la roue libre 22 car celle-ci n'est pas bloquée.

Dès que le moteur à combustion interne a démarré, sa vitesse de rotation est nettement plus grande que celle obtenue à l'aide du démarreur et entraîne la rotation de l'arbre 19 à une grande vitesse de rotation et il en est de même du porte-satellites 18. Comme le couple résistant est sur le solaire 15 (passage en mode alternateur), les satellites 16 et 17 entraînent préférentiellement la couronne 21. Celle-ci n'étant soumise à aucun couple résistant voit sa vitesse augmentée régulièrement alors que celle du solaire diminue de façon proportionnelle. La vitesse de la couronne 21 finit par devenir égale à la vitesse du porte-satellites 18 ce qui entraîne le blocage de la roue libre 22 de sorte que la couronne et le porte-satellites tournent à la même vitesse et il en est alors de même pour le solaire 15. On se trouve alors en prise directe entre le rotor 11 et la poulie 20.

Par le dispositif d'accouplement décrit en relation avec les figures 1 et 2, on obtient un fonctionnement en démarreur de l'alternateur lorsque le moteur à combustion interne est à l'arrêt et un fonctionnement en alternateur lorsque le moteur a démarré, la commutation étant obtenue automatiquement par le simple fait du changement de vitesse du moteur.

Lorsque le rapport de démultiplication qui est nécessaire entre l'alternateur-démarreur et le moteur à combustion interne est élevé et ne peut pas être réalisé avec un seul train épicycloïdal, l'invention propose d'utiliser au moins deux trains épicycloïdaux plans à satellites simples disposés en série.

La figure 3 est un schéma montrant un exemple de réalisation de ce type dans lequel les éléments identiques à ceux de la figure 1 portent les mêmes références. Un deuxième train épicycloïdal référencé 34, a été intercalé entre l'arbre de sortie 13 et la roue dentée ou solaire 15. Il comprend une roue dentée ou solaire 35 qui entraîne en rotation au moins deux satellites 36 et 37 portés par un porte-satellites 38 solidaire de la roue dentée 15 du premier train épicycloïdal par l'intermédiaire d'une liaison 39. Les satellites 36 et 37 entraînent en rotation une couronne dentée 41 qui est connectée au porte-satellites 38 par une roue libre 42 et au châssis ou carter 23 par une autre roue libre 44. Les roues libres 42 et 44 sont analogues respectivement aux roues libres 22 et 24 dans leur fonctionnement.

Bien entendu, les deux trains épicycloïdaux peuvent être identiques, notamment dans leur rapport de démultiplication, mais ils peuvent aussi être différents de manière à obtenir le rapport de démultiplication désiré.

Le fonctionnement du dispositif de la figure 2 est similaire à celui de la figure 1 et ne sera donc pas décrit à nouveau.

## Revendications

1. Alternateur-démarreur comportant un alternateur (10) dont l'arbre de sortie (13) est couplé à un arbre d'entraînement d'un moteur par un dispositif d'accouplement, caractérisé en ce que le dispositif d'accouplement comprend au moins un train épicycloïdal plan à satellites simples (14) dans lequel le solaire (15) est connecté à l'arbre de sortie (13) de l'alternateur tandis que le porte-satellites (18) est connecté à l'arbre d'entraînement du moteur, en ce que la couronne (21) est liée au châssis (23) par une première roue libre (24) et au porte-satellites (18) par une deuxième roue libre (22) et en ce que le sens de rotation des première et deuxième roues libres (24, 22) est celui du solaire (15).

2. Alternateur-démarreur selon la revendication 1, caractérisé en ce que le dispositif d'accouplement comprend deux trains épicycloïdaux plans à satellites simples (14/25) montés en série entre l'arbre de sortie (13) de l'alternateur (10) et l'arbre d'entraînement du moteur.

## Patentansprüche

1. Starter-Generator mit einem Wechselstromgenerator (10), dessen Abtriebswelle (13) an eine Antriebswelle eines Motors über eine Kopplungsvorrichtung angekoppelt ist, **dadurch gekennzeichnet,**

daß die Kopplungsvorrichtung wenigstens einen Umlaufgetriebezug mit Einfach-Satellitenrädern (14) enthält, wobei das Sonnenrad (15) mit der Abtriebswelle (13) des Wechselstromgenerators verbunden ist, während der Satellitenträger (18) mit der Antriebswelle des Motors verbunden ist, daß der Kranz (21) über einen ersten Freilauf (24) mit dem Rahmen (23) und über einen zweiten Freilauf (22) mit dem Satellitenträger (18) verbunden ist und daß die Drehrichtung des ersten und des zweiten Freilaufs (24, 22) der Drehrichtung des Sonnenrades (15) entspricht.

2. Starter-Generator nach Anspruch 1, **dadurch gekennzeichnet**, daß die Kopplungsvorrichtung zwei Umlaufgetriebezüge mit Einfachsatelliten (14/25) enthält, die zwischen der Abtriebswelle (13) des Wechselstromgenerators (10) und der Antriebswelle des Motors in Reihe montiert sind.

## Claims

1. A starter-alternator, having an alternator (10) the output shaft (13) of which is coupled to a drive shaft of a motor by means of a coupling device, characterised in that the coupling device comprises at least one flat epicyclic gear train (14) with simple planet wheels, with its sun wheel (15) coupled to the output shaft (13) of the alternator while the planet wheel carrier (18) is coupled to the drive shaft of the motor, in that the starter crown (21) is connected to the starter-alternator chassis (23) through a first free wheel (24) and to the planet wheel carrier (18) through a second free wheel (22), and in that the direction of rotation of the first and second free wheels (24, 22) is the same as that of the sun wheel (15).

2. A starter-alternator according to Claim 1, characterised in that the coupling device comprises two flat epicyclic gear trains (14, 34), coupled in series between the output shaft (13) of the alternator (10) and the drive shaft of the motor.

**FIG.1**

**FIG.2**

**FIG.3**